# EUROPÄISCHE PATENTSCHRIFT

(11) **EP 2 145 710 B1**
(45) Veröffentlichungstag und Bekanntmachung des Hinweises auf die Patenterteilung: **16.12.2015**
(21) Anmeldenummer: 09009329.5
(22) Anmeldetag: 17.07.2009
(51) Int. Cl.: B23B 49/02

(54) **Vorrichtung zur Nachbearbeitung einer Aufnahmebohrung für Glühkerzen**
Device for post-processing a holder borehole for spark plugs
Dispositif de post-traitement d'un forage de réception pour bougies

(30) Priorität: 18.07.2008 DE 202008009720 U
(43) Veröffentlichungstag der Anmeldung: 20.01.2010
(73) Patentinhaber: Klann Spezial-Werkzeugbau GmbH, 78166 Donaueschingen (DE)
(72) Erfinder: Sjösten, Thomas, 78166 Donaueschingen (DE); Baur, Stefan, 78166 Donaueschingen/Pfohren (DE)
(74) Vertreter: Binner, Bernhard

(56) Entgegenhaltungen:
- DE-A1- 3 129 881
- DE-U1-202007 011 551
- DE-U1-202008 003 936
- US-A1- 2003 185 639
- US-B1- 6 668 784

## Beschreibung

Die Erfindung betrifft eine Vorrichtung zur Nachbearbeitung einer Aufnahmebohrung, insbesondere eines Zylinderkopfes, welche in einen Hohlraum, insbesondere in den Brennraum eines Zylinders, mündet mit einer eine Führungsbohrung aufweisenden Bohrbuchse, welche zum Ausrichten eines in der Führungsbohrung axial verstellbar aufgenommenen Werkzeugteils eines Bearbeitungswerkzeuges in Form eines Bohrwerkzeuges, einer Reibahle, eines Gewindeschneiders oder dgl. konzentrisch an der Aufnahmebohrung ansetzbar und in dieser Position fixierbar ist.

Bei Kraftfahrzeugmotoren, insbesondere bei Dieselmotoren, werden als Starthilfe so genannte Glühkerzen eingesetzt. Solche Glühkerzen sitzen in entsprechenden Aufnahmebohrungen und ragen durch den Zylinderkopf hindurch in den Brennraum zumindest minimal hinein. Damit kann der Dieselmotor vor dem Start, insbesondere Kaltstart, "vorgeheizt" werden. Dementsprechend sind zur Aufnahme solcher Glühkerzen im Zylinderkopf die vorerwähnten Aufnahmebohrungen vorgesehen, welche in ihrem außen liegenden Endbereich ein Innengewinde aufweisen, in welches die entsprechende Glühkerze festsitzend einschraubbar ist. Zum Brennraum hin ist eine solche Aufnahmebohrung in der Regel abgestuft ausgebildet und nimmt ein zylindrisches Schaftteil sowie das Heizelement der Glühkerze auf. Dieses Heizelement wird von einem Montagerohr aufgenommen, welches in seinem dem Heizelement gegenüber liegenden Endbereich mit dem vorerwähnten Montagegewinde versehen ist. In der Regel ist die Aufnahmebohrung zur Aufnahme der Glühkerze zum Brennraum hin radial verjüngt ausgebildet, wodurch eine Art Dichtsitz gebildet wird. Das Montagerohr der Glühkerze ist dieser abgesetzten Ausbildung der Aufnahmebohrung entsprechend angepasst und weist in entsprechend axialer Anordnung eine umlaufende Dichtfläche auf. Mit dieser Dichtfläche kommt das Montagerohr beim Einschrauben mit dem Dichtsitz der Aufnahmebohrung des Zylinderkopfes dichtend zur Anlage.

Wie weiter aus dem Stand der Technik bekannt ist, ist es nach längerer Betriebsdauer eines Dieselmotors häufig notwendig, defekte Glühkerzen auszutauschen. Die während des Betriebes eines Dieselmotors stets auftretenden Temperaturänderungen können dazu führen, dass das Montagerohr mit seinem Montagegewinde im Innengewinde der Aufnahmebohrung des Zylinderkopfes äußerst fest sitzt. Dies hat wiederum zur Folge, dass beim Versuch, die Glühkerze über ihren Außensechskant aus der Bohrung heraus zu drehen, dieser Außensechskant abschert und somit das Montagerohr mit seinem Montagegewinde im Innengewinde des Zylinderkopfes verbleibt.

Zur Erneuerung bzw. zum Austausch der Glühkerze ist es folglich notwendig, diesen Rest der "alten" Glühkerze aus der Aufnahmebohrung des Zylinderkopfes zu entfernen. In der Regel werden hierzu verschiedene Werkzeuge, insbesondere Bohrbearbeitungswerkzeuge nacheinander eingesetzt, um das Montagerohr mit seinem Montagegewinde sowie auch den restlichen Rohrabschnitt der Glühkerze aus der Aufnahmebohrung des Zylinderkopfes entfernen zu können. Bezüglich der erforderlichen Arbeitsschritte zum Entfernen der "Glühkerzenreste" wird beispielhaft auf die DE 20 2005 008 241 U1 verwiesen, in welcher diese detailliert beschrieben sind.

Des Weiteren ist es häufig notwendig, nachdem die "alte" Glühkerze vollständig aus der Aufnahmebohrung des Zylinderkopfes entfernt ist, dass das Innengewinde der Aufnahmebohrung oder auch die sich daran anschließenden Bohrungsabschnitte selbst mittels entsprechender "Bohrwerkzeuge" nachzuarbeiten sind. Diese Nachbearbeitung ist notwendig, um die neue Glühkerze wieder korrekt in den Zylinderkopf einsetzen zu können.

Aufgrund der sich in der Aufnahmebohrung und deren Bohrungsabschnitte absetzenden Ablagerungen von Verbrennungsrückständen kann es des Weiteren auch notwendig sein, die abgestuften zylindrischen Bohrungsabschnitte beispielsweise mit einer Reibahle oder dgl. nachzuarbeiten, so dass die neue Glühkerze wieder in die Bohrungsabschnitte passend eingesetzt werden kann. D. h., dass diese Nachbearbeitung in der Regel zum Entfernen von Verbrennungsrückständen oder sonstigen Verunreinigungen dient, wie beispielsweise Oxidationsprodukten, so dass die Aufnahmebohrung nach diesem Arbeitsschritt zumindest annähernd wieder ihren ursprünglichen "Neuzustand" einnimmt.

Bei dieser Nachbearbeitung sowohl des Innengewindes als auch der gesamten Aufnahmebohrung des Zylinderkopfes ist es allerdings notwendig, die entsprechend dafür vorgesehenen Werkzeuge mit möglichst großer Präzision auf die Längsmittelachse der Aufnahmebohrung des Zylinderkopfes konzentrisch auszurichten.

Für diese Ausrichtung wird beim Gegenstand der DE 20 2005 008 241 U1 ein Werkzeugsystem eingesetzt. Dabei dient zur Führung der entsprechenden Werkzeuge eine Klemmhülse, durch welche eine Zentrierhülse (Bohrbuchse) entsprechend konzentrisch zur Längsmittelachse der Aufnahmebohrung des Zylinderkopfes ausgerichtet werden kann. Voraussetzung für den Einsatz dieses Werkzeugsystems ist jedoch, dass im Umgebungsbereich der Aufnahmebohrung des Zylinderkopfes eine zylindrische oder leicht kegelige, radial erweiterte Einsenkung mit entsprechender axialer Länge vorhanden ist. Durch Einsetzen der Klemmhülse zusammen mit der Zentrierhülse (Bohrbuchse) in diese Einsenkung wird zwangsläufig eine koaxial, konzentrische Ausrichtung dieser Bauteil und damit eines über die Zentrierhülse geführten Werkzeuges zur Längsmittelachse der Aufnahmebohrung erreicht. Ist eine solche Einsenkung im Umgebungsbereich der Aufnahmebohrung nicht vorhanden, ist dieses Werkzeug nicht einsetzbar.

Hierzu ist beispielsweise aus der DE 20 2007 011 551 U1 ein Werkzeug bekannt, welches in den Fällen einsetzbar ist, in welchen eine solche Vertiefung im Umgebungsbereich der Aufnahmebohrung des Zylinderkopfes nicht vorhanden ist. Allerdings bedingt dieses Werkzeug, dass im Umgebungsbereich der Aufnahmebohrung des Zylinderkopfes eine Art Zentrieransatz vorhanden ist, welcher beispielsweise eine radial erweiterte, leicht vertiefte, konzentrisch zur Aufnahmebohrung angeordnete, umlaufende Ausfräsung bildet. Beim Gegenstand dieser DE 20 2007 011 551 U1 kann nun eine entsprechend stirnseitig in ihrer Form an diesen Zentrieransatz angepasste Zentrierbuchse (Bohrbuchse) eingesetzt werden, welche mittels einer Spannvorrichtung axial gegen diesen Zentrieransatz verspannt wird. Bei diesem Spannvorgang wird die Zentrierbuchse (Bohrbuchse) einerseits koaxial zur Längsmittelachse der Aufnahmebohrung des Zylinderkopfes ausgerichtet und andererseits zu dieser Längsmittelachse zentriert. Auch ist dieser DE 20 2007 011 551 U1 entnehmbar, dass anstatt eines solchen "eingesenkten" Zentrieransatzes auch eine Art nach außen vorstehender domartiger Zentrieransatz vorgesehen sein kann, so dass in entsprechender Anpassung der Zentrierbuchse ebenfalls eine konzentrische und koaxiale Ausrichtung der Zentrierbuchse zur Längsmittelachse der zu bearbeitenden Bohrung ermöglicht wird.

Nun sind wiederum weitere spezielle Ausgestaltungen von Zylinderköpfen bekannt, bei welchen im Umgebungsbereich der Bohrung des Zylinderkopfes weder solche Zentrieransätze noch irgendwelche Vertiefungen oder andere Einsenkungen vorhanden sind, so dass die beiden oben genannten Werkzeuge bzw. Werkzeugsysteme nicht einsetzbar sind.

Bei solchen Zylinderköpfen ist der Umgebungsbereich der Aufnahmebohrung in der Regel zwar planeben abgefräst, weist jedoch keine umlaufenden regelmäßigen Konturen auf, welche zur Ausrichtung einer Zentrierbuchse oder auch eines Bohrwerkzeuges selbst dienen könnten. Des Weiteren sind solche Zylinderköpfe im Allgemeinen mit einer Vielzahl von Bohrungen oder Einsenkungen versehen, welche nicht im Umgebungsbereich der zu bearbeitenden Bohrung des Zylinderkopfes angeordnet sind. Weiter ist insbesondere bekannt, dass solche Aufnahmebohrungen zur Aufnahme beispielsweise einer Glühkerze im Randbereich der Auslasskanäle oder Ansaugkanäle des Zylinderkopfes angeordnet sind. Solche Auslasskanäle oder Ansaugkanäle können bei speziellen Zylinderkopfkonstruktionen nach außen hin mit radial erweiterten zylindrischen Vertiefungen oder Einsenkungen versehen sein, in welche beispielsweise ein Auspuffrohr bzw. ein Ansaugrohr einsteckbar ist. Auch sind Konstruktionen bekannt, bei welchen der Umgebungsbereich aller Auslasskanäle bzw. aller Ansaugkanäle planeben ausgebildet ist, wobei die Ansaugkanäle bzw. Einlasskanäle zu dieser gebildeten Ebene mit ihren Vertiefungen bzw. mit der Längsmittelachse ihrer zylindrischen Vertiefungen im Wesentlichen rechtwinklig verlaufen.

Um bei solche Konstruktionen von Zylinderköpfen eine Bohrbuchse oder Zentrierbuchse zur Werkzeugausrichtung präzise ansetzen zu können ist aus der DE 20 2008 003 936 U1 eine Vorrichtung bekannt, bei welcher eine sog. Führungsplatte mit wenigstens einer Führungsbohrung verwendet wird. Diese Führungsbohrung ist mit wenigstens einem Ausrichtelement versehen, welches wahlweise mit einem Auslass- oder Ansaugkanal des Zylinderkopfes positionsgenau in Eingriff gebracht werden kann. Des Weiteren kann diese Führungsplatte über wenigstens eine Montageschraube auf einer Anlagefläche des Zylinderkopfes feststehend montiert werden. In dieser präzise am Zylinderkopf ausgerichteten Position der Führungsplatte sind die Führungsbohrungen präzise auf eine der zu bearbeitenden Aufnahmebohrungen des Zylinderkopfes ausgerichtet. Zur Bearbeitung der Aufnahmebohrungen mit verschiedenen Bearbeitungswerkzeugen können beim Gegenstand der DE 20 2008 003 936 U1, die dem Oberbegriff von Anspruch 1 zugrunde gelegt ist, sog. Bohrbuchsen vorgesehen sein, welche entsprechend in die Führungsbohrungen einsetzbar sind. Diese Bohrbuchsen weisen eine entsprechende Führungsbohrung auf, in welche das entsprechende Bearbeitungswerkzeug beispielsweise mit einem Führungsschaft axial verschiebbar und drehbar einsetzbar ist. Als Bearbeitungswerkzeuge können beispielsweise Reibahlen, Gewindeschneider und dgl. mehr eingesetzt werden. Diese Bearbeitungswerkzeuge zeichnen sich dadurch aus, dass diese im Bearbeitungsbereich längs verlaufende oder spiralförmig verlaufende Nuten aufweisen, um bei der Bearbeitung der Aufnahmebohrungen entsprechend entstehende Späne aufzunehmen.

Es hat sich nunmehr gezeigt, dass insbesondere bei der Entstehung von größeren Spänen diese über die Aufnahmebohrung beispielsweise in den Brennraum des Kraftfahrzeugmotors gelangen können. Dies ist für den späteren Betrieb eines solchen Kraftfahrzeugmotors schädlich, da durch diese im Brennraum befindlichen Späne der Zylinder und/oder auch der Kolben Schaden nehmen kann.

Weiterhin ist aus der US 2003 0 185 639 eine Werkzeugpositioniervorrichtung mit einer Zentrierbuchse und einer Absaugeinrichtung bekannt.

Demgemäß liegt der Erfindung ausgehend vom genannten Stand der Technik die Aufgabe zugrunde, eine Vorrichtung der gattungsgemäßen Art derart auszugestalten, dass bei der Bearbeitung der Aufnahmebohrung evtl. entstehende Späne nicht in den Brennraum gelangen können.

Die Aufgabe wird zusammen mit den Merkmalen des Oberbegriffes des Anspruches 1 dadurch gelöst, dass die Bohrbuchse mit einer Saugeinrichtung versehen ist, durch welche in der Aufnahmebohrung ein Saugluftstrom bewirkbar ist, mittels welchem bei der Bearbeitung der Aufnahmebohrung entstehende Späne oder dgl. nach außen abführbar sind, wobei die Nut des Werkzeugteils zusammen mit der Führungsbohrung der Bohrbuchse eine Art Abfuhrkanal zur Späneabfuhr bildet.

Durch die erfindungsgemäße Ausgestaltung wird verhindert, dass bei der Nachbearbeitung einer Aufnahmebohrung entstehende Späne in den Hohlraum, insbesondere in den Brennraum eines Kraftfahrzeugmotors eindringen können.

Hierzu ist erfindungsgemäß an der Bohrbuchse eine Saugeinrichtung vorgesehen, über welche die entstehenden Späne abgesaugt werden können. Da bei stillstehendem Kraftfahrzeugmotor die Abdichtung zwischen Zylinder und Kolben nicht vollständig ist und Luft aus dem sog. Kurbelgehäuse an den Kolbenringen vorbei in den Brennraum angesaugt werden kann, entsteht durch die vorgesehene Saugeinrichtung eine Luftströmung durch die Aufnahmebohrung hindurch, welche aus dem Brennraum heraus führt. Bei ventilgesteuerten Viertaktmotoren kann der Kraftfahrzeugmotor auch in eine Drehstellung gebracht werden, in welcher wenigstens eines der Ventile des zugehörigen Zylinders offen ist, so dass ein äußerst starker Luststrom bewirkt werden kann, da der Brennraum über das offene Ventil "belüftet" wird. Durch diese Luftströmung sind somit die entstehenden Späne, bevor diese in den Brennraum gelangen können, aus der Aufnahmebohrung absaugbar. Dabei können die abgesaugten Späne über einen entsprechenden Abfuhrkanal in einen Aufnahmebehälter oder dgl. gefördert werden.

Weitere vorteilhafte Ausgestaltungen der Erfindung sind den weiteren Unteransprüchen entnehmbar, die nachfolgend nochmals zitiert werden.

So kann gemäß Anspruch 2 vorgesehen sein, dass die Saugeinrichtung nach dem "Venturiprinzip" arbeitet und in einem Kopfteil der Bohrbuchse angeordnet ist und, dass die Saugwirkung über die Führungsbohrung in die Aufnahmebohrung eingeleitet wird.

Gemäß Anspruch 3 kann das Kopfteil als Saugeinrichtung eine radial abgesetzt ausgebildete Durchgangbohrung aufweisen, welche quer zur Führungsbohrung verlaufend im Kopfteil angeordnet ist und welche mit der Führungsbohrung in Wirkverbindung steht. Des Weiteren ist der Durchgangsbohrung zur Erzeugung der Saugwirkung ein Luftstrom von einer Druckluftquelle zuführbar ist.

Da in einer Kfz-Werkstatt stets eine Druckluftquelle vorhanden ist, stellt dies Art der Ausbildung der Saugeinrichtung nach dem "Venturiprinzip" eine äußerst einfache und in jeder Werkstatt ohne weitere zusätzliche Einrichtungen einsetzbare Saugeinrichtung dar. Durch den durch die Durchgangsbohrung hindurch geführten Luftstrom wird in der Führungsbohrung, welche wiederum mit der zu bearbeitenden Aufnahmebohrung in Verbindung steht ein "Unterdruck" erzeugt, welcher wiederum in der Führungsbohrung und damit auch in der Aufnahmebohrung des Zylinderkopfes eine starke Luftströmung hervorruft. Diese Luftströmung ist wiederum ausreiche3nd ausgeprägt um bei der Bearbeitung der Aufnahmeb9ohrung anfallende Späne nach außen zu fördern, so dass diese nicht in den zugehörigen Brennraum des Motors gelangen können.

Die weitere Ausgestaltung der Saugeinrichtung ist den Ansprüchen 4 bis 8 entnehmbar.

Dabei ist vorgesehen, dass die Durchgangsbohrung "eingangsseitig" mit einem Montagegewinde versehen ist, mit welchem ein Anschlussstutzen zur Zuführung der Druckluft dicht koppelbar ist. Weiter schließt sich an das Montagegewinde der Durchgangsbohrung in Strömungsrichtung ein Kanalabschnitt mit kleinem Durchmesser an. Dieser Kanalabschnitt wiederum ist im Kopfteil tangential an der Führungsbohrung vorbei geführt. Dabei steht der Kanalabschnitt nicht direkt mit der Führungsbohrung in Verbindung. Diese tangentiale Anordnung bewirkt, dass der durch die Druckluft erzeugte Luftstrom die Führungsbohrung nicht durchströmt. Dies ist insoweit von Bedeutung, als in der Führungsbohrung das Werkzeugteil des Bearbeitungswerkzeuges während der Bearbeitung der Aufnahmebohrung angeordnet ist und der Luftstrom verwirbelt werden würde, was die Saugwirkung beeinträchtigen könnte. Zur Erzeugung eines möglichst starken "Unterdruckes" in der Führungsbohrung schließt sich in Strömungsrichtung an den Kanalabschnitt ein radial erweiterter Auslasskanal an, welcher mit dem Führungsbohrung in Verbindung steht. Zur "Späneabfuhr" bildet der Auslasskanal in seinem äußeren Endbereich einen radial erweiterten Kupplungsabschnitt bildet, in welchen ein Auslassrohr im Wesentlichen dicht einsetzbar ist.

Um die Späne (oder sonstigen bei der Bohrungsbearbeitung anfallenden Verunreinigungen) gezielt auffangen zu können kann gemäß Anspruch 9 vorgesehen sein, dass das Auslassrohr eine äußere umlaufende Montagenut aufweist, mit welcher ein Auffangbehältnis, insbesondere in Form eines textilen Sackes zur Aufnahme der "abgesaugten" Späne koppelbar ist.

In den Ansprüchen 10 und 11 geht es um die Vorteilhafte Ausgestaltung der Bearbeitungswerkzeuges und deren Abdichtung zum Kopfteil der Bohrbuchse. Demnach kann das Bearbeitungswerkzeug zur Aufnahme des eigentlichen Werkzeugteils ein Aufnahmeelement aufweisen, welches zur Betätigung mit einem Betätigungselement in Form eines Antriebssechskants und/oder eines Antriebshebels versehen ist. Um sicherzustellen, dass der Luftstrom aus der Aufnahmebohrung herausführt ist die Führungsbohrung zum Bearbeitungswerkzeug hin abgedichtet. Hierzu ist dass zwischen dem Bearbeitungswerkzeug und dem Kopfteil der Bohrbuchse ein Dichtelement, insbesondere in Form eines Faltenbalges vorgesehen ist, durch welches die Führungsbohrung nach außen abgedichtet ist. Ein solcher Faltenbalg lässt in einfacher Weise eine relative axiale Bewegung des Bearbeitungswerkzeuges zur Bohrbuchse und auch eine relative Drehbewegung zu, wobei gleichzeitig eine Dichtwirkung erzielbar ist. Damit wird nicht von außen Umgebungsluft in die Führungsbohrung eingesaugt. Damit wirkt der durch die "Querströmung" in der Durchgangsbohrung des Kopfteils erzeugte Unterdruck ausschließlich in der mit der Führungsbohrung in Verbindung stehenden, zu bearbeitenden Aufnahmebohrung des Zylinderkopfes. Gleichzeitig kann das Werkzeugteil des Bearbeitungswerkzeuges drehend und axial verstellbar angetrieben werden.

Weiter kann gemäß Anspruch 12 vorgesehen sein, dass die Bohrbuchse in ihrem dem Kopfteil axial gegenüberliegenden Endbereich einen axial vorstehenden Kupplungsstutzen aufweist, mit welchem die Bohrbuchse im Wesentlichen dicht an einem Zylinderkopf im Bereich der zu bearbeitenden Aufnahmebohrung ansetzbar ist.

Die Ansprüche 13 und 14 betreffen die Ausgestaltung der Fixierung der Bohrbuchse an einem Zylinderkopf. Hierzu ist ein Montagesteg vorgesehen, welcher in einer vorbestimmten Position am Zylinderkopf befestigbar ist. Dieser Montagesteg weist mehrere Aufnahmebohrungen auf, in welche die Bohrbuchse wahlweise feststehend einsetzbar ist. Die Aufnahmebohrungen sind im Montagesteg wiederum in ihrem Abstand und in ihrer Ausrichtung derart angeordnet, dass die in die jeweilige Aufnahmebohrung eingesetzte Bohrbuchse zwangläufig präzise auf die jeweils zu bearbeitende Aufnahmebohrung des Zylinderkopfes ausgerichtet ist. somit könne mehrere Aufnahmebohrungen des Zylinderkopfes in einer "Aufspannung" des Montagesteges nacheinander bearbeitet werden, sofern dies notwendig ist.

Soll nur eine der Aufnahmebohrungen nachgearbeitet werden, so kann gemäß Anspruch 14 weiter vorgesehen sein, dass zur präzisen Positionierung des Montagesteges an einem Zylinderkopf zusätzliche Stützhülsen vorgesehen sind, die in die Aufnahmebohrungen des Montagesteges einsetzbar sind, in welcher die Bohrbuchse nicht eingesetzt ist und, dass sich die Stützhülsen im montierten Zustand vorzugweise im Umgebungsbereich von nicht zu bearbeitenden Aufnahmenbohrungen des Zylinderkopfes abstützen. Dabei können die Stützhülsen auch derart ausgestaltet sein, dass diese in der Lage sind, die in den nicht zu bearbeitenden Aufnahmebohrungen noch sitzenden Glühkerzen (oder evtl. andere Bauteile) im angesetzten Zustand aufzunehmen.

Schlussendlich kann gemäß Anspruch 15 zur feststehenden Fixierung des Montagesteges am Zylinderkopf eine den Montagesteg durchragende Befestigungsschraube vorgesehen sein, wobei zwischen dem Montagesteg und der Zylinderkopf im Bereich der Befestigungsschraube eine Distanzhülse vorgesehen ist.

Die Ausgestaltung der Befestigungseinrichtung für die Bohrbuchse kann aber auch, wie bereits eingangs zum Stand der Technik beschrieben anders ausgebildet sein. Dies ist im Wesentlichen von den Einsatzbedingungen für die erfindungsgemäße Vorrichtung abhängig. Insoweit wird hier vollumfänglich auf den angeführten stand der Technik verwiesen. Auch kann die Bohrbuchse oder zumindest deren Führungsbohrung integraler Bestandteil des Montagesteges sein.

Weiter ist anzumerken, dass die Saugeinrichtung beispielsweise auch aus einer mechanischen Saugpumpe oder dgl. bestehen kann, welche mit der Durchgangsbohrung im Kopfteil der Bohrbuchse gekoppelt ist. In einem solchen Fall ist die Durchgangsbohrung der Bohrbuchse beispielsweise als Sacklochbohrung ausgebildet und einseitig verschlossen, so dass der durch die Saugpumpe erzeugte Unterdruck ausschließlich in der Führungsbohrung und der mit dieser gekoppelten Aufnahmebohrung des Zylinderkopfes wirkt.

Auch ist das Anwendungsgebiet der erfindungsgemäßen Vorrichtung nicht auf den Einsatz an einem Zylinderkopf beschränkt.

Anhand der Zeichnung wird nachfolgend ein Ausführungsbeispiel der Erfindung näher erläutert. Hierzu ist anzumerken, dass die im Ausführungsbeispiel dargestellte Saugeinrichtung auch beliebig anders ausgestaltet sein kann. Die im Ausführungsbeispiel dargestellte und beschriebene Saugeinrichtung arbeitet nach dem sog. "Venturi-Prinzip". D. h., dass die Saugwirkung durch quer zur Führungsbohrung der Bohrbuchse erzeugt wird. Es zeigt:
- Fig. 1: eine perspektivische Darstellung einer erfindungsgemäßen Bohrbuchse mit entsprechenden Anschlusselementen;
- Fig. 2: einen Anschlussstutzen, welcher mit der Bohrbuchse aus Fig. 1 in Eingriff bringbar ist;
- Fig. 3: eine perspektivische Darstellung eines Auslassrohres, welches in axialer Verlängerung zum Anschlussstutzen aus Fig. 2 ebenfalls an der Bohrbuchse aus Fig. 1 feststehend montierbar ist;
- Fig. 4: einen Horizontalschnitt durch die Bohrbuchse aus Fig. 1 mit montiertem Auslassrohr sowie mit montiertem Anschlussstutzen;
- Fig. 5: einen Vertikalschnitt durch ein Bearbeitungswerkzeug;
- Fig. 6: einen Vertikalschnitt durch die Bohrbuchse aus Fig. 1 mit montiertem Anschlussstutzen sowie mit montiertem Auslassrohr sowie eingesetztem Bearbeitungswerkzeug aus Fig. 5;
- Fig. 7: eine Seitenansicht zusammen mit einem Horizontalschnitt durch einen Montagesteg, mittels welchem u.a. die Bohrbuchse aus Fig. 1 an einem Zylinderkopf festlegbar ist;
- Fig. 8: einen Vertikalschnitt durch den Montagesteg aus Fig. 7 mit zwei zusätzlichen einfachen Stützhülsen sowie einer Befestigungsschraube, über welche der Montagesteg an einem Zylinderkopf feststehend montierbar ist;
- Fig. 9: eine Schnittdarstellung IX-IX aus Fig. 8, aus welcher beispielhaft die Fixierung einer der Stützhülsen im Montagesteg ersichtlich ist.

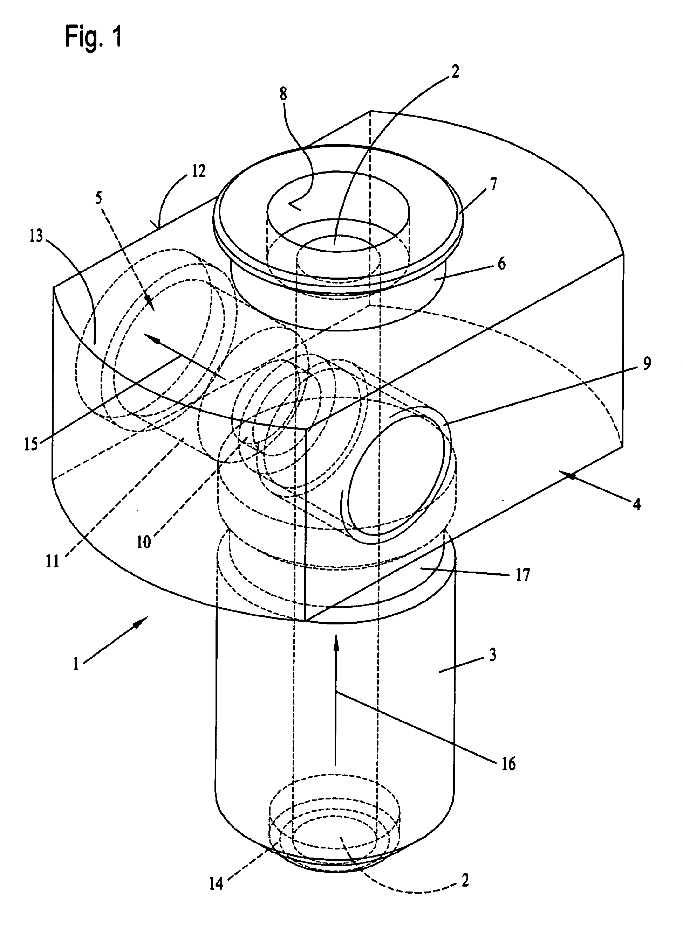

Fig. 1 zeigt beispielhaft eine perspektivische Darstellung einer erfindungsgemäßen Bohrbuchse 1, welche über entsprechende Montagemittel beispielsweise an einem Zylinderkopf eines Kraftfahrzeugmotors in einer vorbestimmten Position befestigbar ist. Die Bohrbuchse 1 weist beim vorliegenden Ausführungsbeispiel eine durchgehende Führungsbohrung 2 auf, welche zur verstellbaren, insbesondere zur drehbaren und axial verschiebbaren Aufnahme eines Bearbeitungswerkzeuges bzw. dessen Werkzeugteils dient.

Des Weiteren ist aus Fig. 1 ersichtlich, dass die Bohrbuchse 1 in ihrem unteren Endbereich einen zylindrischen Aufnahmeabschnitt 3 bildet, mit welchem die Bohrbuchse 1 beispielsweise mit einem Montageelement zur Fixierung an einem Zylinderkopf einsetzbar ist. Zur Festlegung der Bohrbuchse 1 in diesem Montageelement kann eine umlaufende Montagenut 17 vorgesehen sein, in welche beispielsweise eine Klemmschraube des Montageelementes im montierten Zustand eingreift.

Des Weiteren ist beim vorliegenden Ausführungsbeispiel im oberen Endbereich der Bohrbuchse 1 ein Kopfteil 4 vorgesehen, welches mit einer quer zur Führungsbohrung 2 verlaufenden Durchgangsbohrung 5 versehen ist. Oberseitig ist am Kopfteil 4 ein zylindrisches Kupplungselement 6 vorgesehen, in dessen oberen Endbereich ein umlaufender, radial vorstehender Montagesteg 7 angeordnet ist. Im Bereich dieses Montagesteges 7 bildet die Führungsbohrung 2 einen radial erweiterten Aufnahmeansatz 8.

Wie aus Fig. 1 ersichtlich ist, ist die Durchgangsbohrung 5 in unterschiedliche Abschnitte aufgeteilt, welche unterschiedliche Durchmesser aufweisen. So weist die Durchgangsbohrung 5 vorderseitig ein Montagegewinde 9 auf, in welches beispielsweise ein Anschlussstutzen dicht einschraubbar ist. Nach innen schließt sich an dieses Montagegewinde 9 ein Kanalabschnitt 10 an, welcher im Durchmesser verkleinert ausgebildet ist. Dieser Kanalabschnitt 10 mündet in einen radial erweiterten Auslasskanal 11, welcher mit der Führungsbohrung 2 in Verbindung steht (in der Zeichnung der Fig. 1 nicht erkennbar). Dieser Auslasskanal 11 ist im Bereich der Rückseite 12 des Kopfteils 4 mit einem radial erweiterten Kupplungsabschnitt 13 versehen, welcher beim vorliegenden Ausführungsbeispiel zur Kopplung mit einem Auslassrohr dient.

Des Weiteren ist aus Fig. 1 ersichtlich, dass die Bohrbuchse 1 unterseitig einen axial vorstehenden Kupplungsstutzen 14 aufweist, mit welchem die Bohrbuchse 1 im Wesentlichen dicht im Bereich einer zu bearbeitenden Aufnahmebohrung beispielsweise eines Zylinderkopfes ansetzbar ist. In diesem angesetzten Zustand verläuft die Bohrbuchse mit ihrer Führungsbohrung 2 koaxial ausgerichtet zu der zu bearbeitenden Aufnahmebohrung des Zylinderkopfes.

Die Durchgangsbohrung 5 dient beim vorliegenden Ausführungsbeispiel zum Erzeugen eines Unterdruckes in der Führungsbohrung 2, welcher im am Zylinderkopf angesetzten Zustand auch in der Aufnahmebohrung beispielsweise des Zylinderkopfes wirksam ist. Dazu wird über einen mit dem Montagegewinde 9 dicht in Verbindung stehenden Anschlussstutzen der Durchgangsbohrung 5 Druckluft aus einer nicht weiter dargestellten Druckluftquelle zugeführt, welche diese Durchgangsbohrung 5 in Richtung des Pfeiles 15 durchströmt. Aufgrund der unterschiedlichen Durchmesser, insbesondere des Kanalabschnittes 10 und des vergrößerten Durchmessers des Auslasskanals 11, welcher mit der Führungsbohrung 2 in Verbindung steht, sowie der Strömungsgeschwindigkeit der Druckluft wird durch die Luftströmung in Richtung des Pfeiles 15 in der Führungsbohrung 2 ein Unterdruck erzeugt. Durch diesen Unterdruck wird beispielsweise aus dem Brennraum eines Zylinders in Richtung des Pfeiles 16 ein Saugluftstrom bewirkt, so dass bei der Bohrbearbeitung anfallende Späne oder Verunreinigungen aus der zu bearbeitenden Aufnahmebohrung über die Führungsbohrung 2 abgesaugt werden.

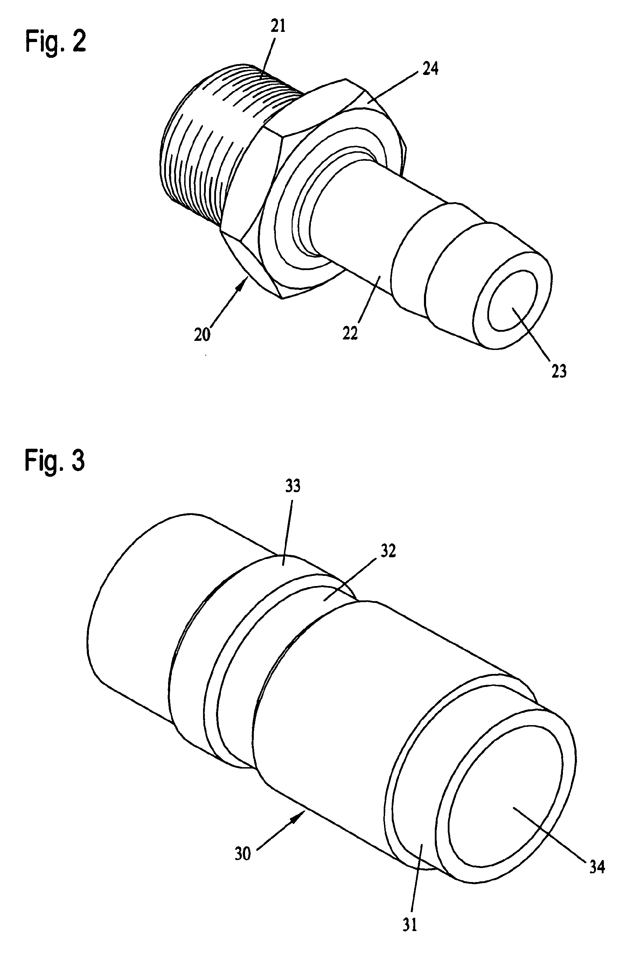

Fig. 2 zeigt hierzu beispielhaft eine perspektivische Darstellung eines Anschlussstutzens 20, welcher in das Montagegewinde 9 des Kopfteiles 4 dicht einschraubbar ist. Hierzu weist der Anschlussstutzen 20 ein entsprechendes Außengewinde 21 auf. Für eine dichte Verbindung mit dem Montagegewinde 9 kann dieses Außengewinde 21 konisch ausgebildet sein.

Des Weiteren ist der Anschlussstutzen 20 mit einem Anschlusszapfen 22 versehen, auf welchen zur Druckluftzufuhr beispielsweise ein Druckschlauch dicht aufsteckbar ist. Des Weiteren weist der Anschlussstutzen 20 eine entsprechende Durchgangsbohrung 23 auf, welche im montierten Zustand des Anschlussstutzens 20 im Montagegewinde 9 im Wesentlichen in den Kanalabschnitt 10 der Durchgangsbohrung 5 des Kopfteiles 4 mündet. Zur feststehenden Montage des Anschlussstutzens 20 weist dieser in bekannter Weise zwischen dem Anschlusszapfen 22 und dem Außengewinde 21 einen radial erweitert ausgebildeten Sechskant 24 auf.

Es ist leicht vorstellbar, dass über diesen Anschlussstutzen 20 im montierten Zustand am Kopfteil 4 der Durchgangsbohrung 5 entsprechend Druckluft zuführbar ist, welche in Richtung des Pfeiles 15 die Durchgangsbohrung 5 mit relativ hoher Geschwindigkeit durchströmt.

Fig. 3 zeigt ein Auslassrohr 30, welches zur feststehenden Montage im Kupplungsabschnitt 13 des Kopfteiles 4 einen entsprechend radial verjüngt ausgebildeten Zylinderabschnitt 31 aufweist. Dabei kann zur feststehenden Montage des Auslassrohres 30 im Kupplungsabschnitt 13 eine Press-, Löt- oder Schweißverbindung vorgesehen sein.

Des Weiteren ist erkennbar, dass das Auslassrohr 30 etwa mittig eine umlaufende, äußere Montagenut 32 aufweist, über welche das Auslassrohr 30 beispielsweise mit einem luftdurchlässigen Aufnahmebehältnis, beispielsweise in Form eines textilen Sackes, koppelbar ist. Dementsprechend bildet das Auslassrohr 30 anschließend an die Montagenut 32 einen umlaufenden, radial vorstehenden Montagesteg 33. Weiter bildet das Auslassrohr eine Durchgangsbohrung 34, deren Durchmesser etwa dem vergrößerten Durchmesser des Auslasskanals 11 der Durchgangsbohrung 5 entspricht.

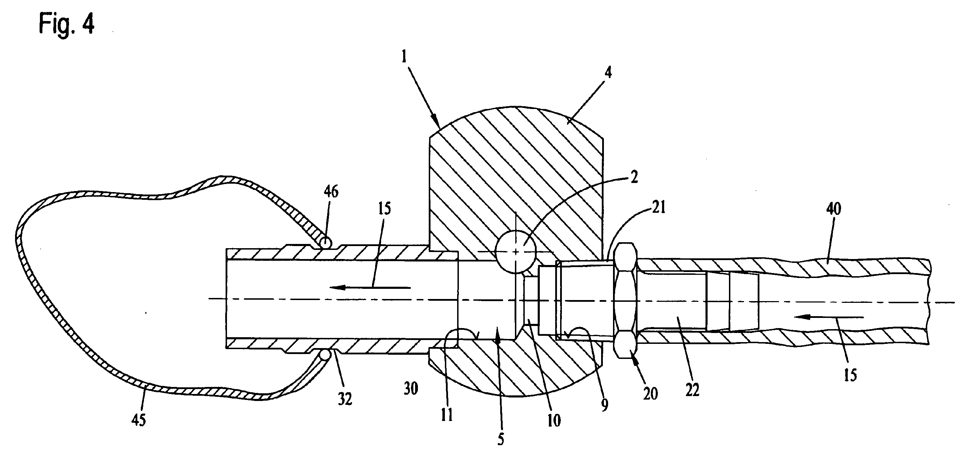

Fig. 4 zeigt einen Horizontalschnitt durch das Kopfteil 4 der Bohrbuchse 1 im Bereich des mit dem Kopfteil 4 in Verbindung stehenden Anschlussstutzen 20 sowie des Auslassrohres 30. Es ist erkennbar, dass der Anschlussstutzen 20 mit seinem Außengewinde 21 feststehend mit dem Montagegewinde 9 des Kopfteiles 4 dicht in Verbindung steht. Auf den Anschlusszapfen 22 ist ein entsprechender Druckschlauch 40 dicht aufgesteckt. Über diesen Druckschlauch 40 ist dem Anschlussstutzen 20 Druckluft zuführbar, so dass einerseits im Druckschlauch 40'und andererseits auch in der Durchgangsbohrung 5 eine starke Luftströmung in Richtung des Pfeiles 15 bewirkt wird. Diese Luftströmung gelangt vom Anschlussstutzen 20 über den Kanalabschnitt 10 und den Auslasskanal 11 in das Auslassrohr 30. Aufgrund der radial erweiterten Ausbildung des Auslasskanals 11 gegenüber dem Kanalabschnitt 10 findet im Übergangsbereich von Kanalabschnitt 10 zum Auslasskanal 11 eine entsprechende Expansion der durchströmenden Luft statt, so dass in der Führungsbohrung 2 ein entsprechender Unterdruck bewirkt wird, da die Führungsbohrung 2 mit dem Auslasskanal 11 in Verbindung steht.

D. h., dass die beim vorliegenden Ausführungsbeispiel dargestellte "Saugeinrichtung" nach dem sog. Venturi-Prinzip arbeitet. Es ist nun leicht vorstellbar, dass aufgrund der entstehenden Saugwirkung in der Führungsbohrung 2 eine mit dieser in Verbindung stehende Aufnahmebohrung beispielsweise eines Zylinderkopfes ebenfalls mit einer entsprechenden Saugströmung in Richtung des Pfeiles 16 aus Fig. 1 beaufschlagt wird. Dadurch wird erreicht, dass bei einer Bohrbearbeitung evtl. entstehende Späne oder sonstige Verunreinigungen aus der zu bearbeitenden Aufnahmebohrung über die Führungsbohrung 2 abgesaugt werden und über das Auslassrohr 30 vom Kopfteil 4 abführbar sind.

Als Auffangbehälter kann dabei beispielsweise ein textiler Sack 45 vorgesehen sein, welcher die entsprechenden Verunreinigungen oder Späne aufnimmt. Die textile Ausbildung hat den Vorteil, dass dieser Sack 45 luftdurchlässig ist, so dass die Luftströmung in Richtung des Pfeiles 15 nur unwesentlich behindert wird und somit ein sicheres Ausbringen der Verunreinigungen oder Späne in Richtung des Pfeiles 15 gewährleistet ist. Dieser Sack 45 kann mit einer Art Gummiring 46 versehen sein, mit welchem der Sack im Wesentlichen dicht, zumindest aber feststehend mit der Montagenut 32 des Auslassrohres 30 in Verbindung steht.

Zur Bohrbearbeitung können hierbei, wie dies aus dem Stand der Technik hinreichend bekannt ist, unterschiedliche Bearbeitungswerkzeuge vorgesehen sein.

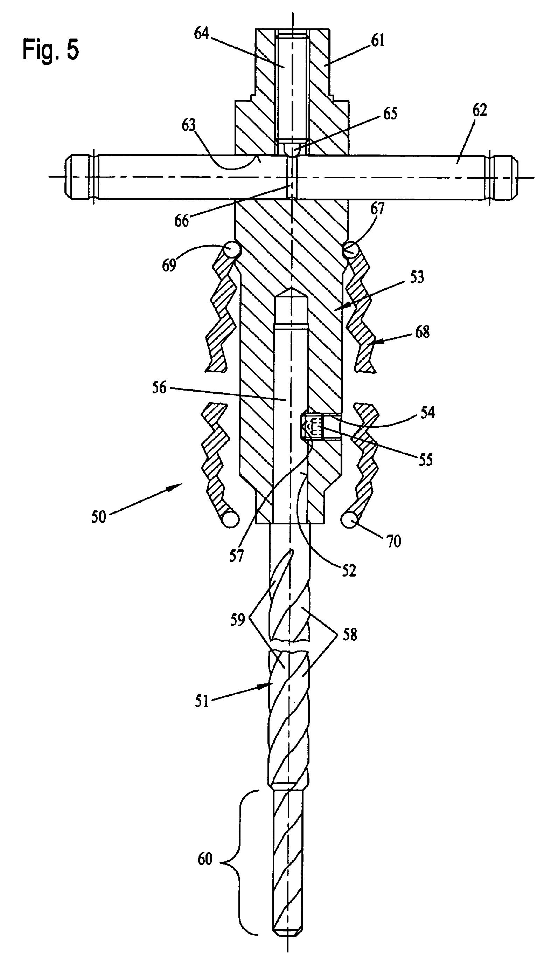

Fig. 5 zeigt hierzu beispielhaft einen Vertikalschnitt durch ein solches Bearbeitungswerkzeug 50, welches beim vorliegenden Ausführungsbeispiel zur Bearbeitung einer Aufnahmebohrung eines Zylinderkopfes eine Reibahle 51 als Werkzeugteil aufweist. Diese Reibahle 51 ist beim vorliegenden Ausführungsbeispiel in eine Lagerbohrung 52 eines Aufnahmeelementes 53 eingesetzt. Zur drehfesten und axial unverschiebbaren Fixierung der Reibahle 51 weist das Aufnahmeelement 53 im Bereich seiner Lagerbohrung 52 ein Innengewinde 54 auf, in welches eine Madenschraube 55 eingeschraubt ist. Zum Einsetzen der Reibahle 51 in die Lagerbohrung 52 bildet diese einen radial verjüngt ausgebildeten Montageschaft 56, welcher mit einer Einsenkung 57 versehen ist, in welche die Madenschraube 55 im montierten Zustand eingreift. Damit ist durch die Madenschraube 55 und die Einsenkung 57 die axiale Position der Reibahle 51 im Aufnahmeelement 53 definiert, wobei gleichzeitig durch die Madenschraube 55 eine drehfeste Verbindung zwischen der Reibahle 51 und dem Aufnahmeelement 53 erreicht wird.

Des Weiteren ist aus Fig. 5 ersichtlich, dass die Reibahle 51 spiralförmig verlaufende Schneidelemente 58 aufweist, welche durch entsprechend spiralförmig verlaufende Nuten 59 voneinander getrennt sind.

Im Betrieb dienen somit diese Nuten 59 in Zusammenwirkung mit der Führungsbohrung 2 als spiralförmige Abfuhrkanäle für die bei der Bearbeitung der Aufnahmebohrung eines Zylinderkopfes anfallenden Späne.

Beim vorliegenden Ausführungsbeispiel ist des Weiteren die Reibahle 51 im Durchmesser abgesetzt ausgebildet und weist in seinem unteren Endbereich einen Schneidenabschnitt 60 auf, welcher im Durchmesser verkleinert ausgebildet ist. Diese Ausgestaltung ist jedoch von der Ausgestaltung der zu bearbeitenden Aufnahmebohrung abhängig.

Des Weiteren ist erkennbar, dass das Aufnahmeelement 53 in seinem oberen Endbereich einen Antriebssechskant 61 aufweist, über welchen das Aufnahmeelement 53 zusammen mit der Reibahle 51 über ein entsprechendes Schlüsselwerkzeug drehend antreibbar ist.

Alternativ oder ergänzend zu einem solchen Schlüsselwerkzeug kann auch ein unterhalb des Antriebssechskantes 61 im Aufnahmeelement 53 angeordneter, quer verlaufender Antriebshebel 62 vorgesehen sein. Dieser Antriebshebel 62 ist dementsprechend in einer quer verlaufenden Lagerbohrung 63 angeordnet und wird durch ein federbelastetes Rastelement 64 in seiner Sollposition fixiert. Dieses Rastelement 64 weist dementsprechend einen federbelasteten Rastzapfen 65 auf, welcher in der Sollposition des Antriebshebels 62 in eine entsprechende Rastnut 66 des Antriebshebels 62 eingreift.

Unterhalb des Antriebshebels 62 weist das Aufnahmeelement 53 eine umlaufende Aufnahmenut 67 auf, welche zur dichten Aufnahme eines Faltenbalges 68 dient. Dieser Faltenbalg 68 steht dabei mit einem entsprechenden Dichtring 69 dicht mit der Aufnahmenut 67 in Verbindung, wobei die Vorspannung dieses Dichtringes 69 derart ausgebildet ist, dass dieser Dichtring 69 bei der Betätigung des Bearbeitungswerkzeuges nicht aus der Aufnahmenut 67 herausrutschen kann. Dieser Faltenbalg 68 dient zur dichten Verbindung des Bearbeitungswerkzeuges 50 mit der Bohrbuchse 1 bzw. dessen Kopfteil 4. Hierzu weist der Faltenbalg 68 einen zweiten Dichtring 70 auf, welcher dicht mit dem Kupplungselement 6 des Kopfteiles 4 aus Fig. 1 in Verbindung bringbar ist. Dieser Faltenbalg 68 hat den Vorteil, dass er in einfachster Weise in seiner axialen Länge bei der Bearbeitung der Aufnahmebohrung eines Zylinderkopfes verstellbar ist. Durch die beiden Dichtringe 69 und 70 ist aber auch gleichzeitig eine drehende Relativbewegung zum Kopfteil 4 sicher möglich, da die Dichtringe 69 und 70 in der Aufnahmenut 67 bzw. im Kupplungselement 6 gleiten können, ohne jedoch deren Dichtwirkung zu verlieren.

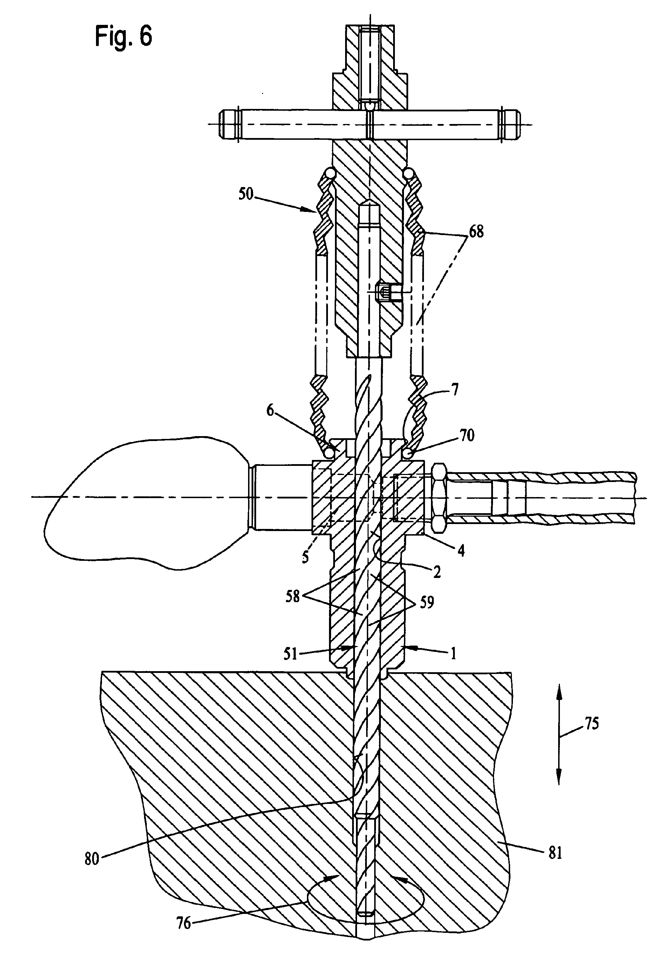

Fig. 6 zeigt hierzu einen Vertikalschnitt durch die Bohrbuchse 1 mit dem eingesetzten Bearbeitungswerkzeug 50. Es ist erkennbar, dass die Reibahle 51 mit ihren Schneidelementen 58 sowie den Nuten 59 in der Führungsbohrung 2 der Bohrbuchse 1 aufgenommen wird. Dabei ist die Reibahle 51 sowohl in Richtung des Doppelpfeiles 75 in der Führungsbohrung 2 verstellbar als auch in Richtung des Doppelpfeiles 76 in der Führungsbohrung 2 drehbar. In diesem montierten Zustand steht der Faltenbalg 68 mit seinem unteren Dichtring 70 mit dem Kupplungselement 6 in Eingriff und wird axial durch den radial vorstehenden Montagesteg 7 des Kupplungselementes 6 gesichert.

Die Reibahle 51 bildet im Bereich der Führungsbohrung 2 durch die spiralförmig angeordneten Nuten 59 umlaufende Abführkanäle, welche in die Durchgangsbohrung 5 des Kopfteiles 4 münden. Somit kann durch diese Nuten 59 eine Saugwirkung in einer Aufnahmebohrung 80 eines Zylinderkopfes 81 bewirkt werden. Diese Aufnahmebohrung 80 bzw. der Zylinderkopf 81 sind in Fig. 6 lediglich schematisch dargestellt.

Anstatt des Faltenbalges 68 kann auch jede andere geeignete Dichtung der Führungsbohrung 2 nach außen hin zur Reibahle 51 vorgesehen sein.

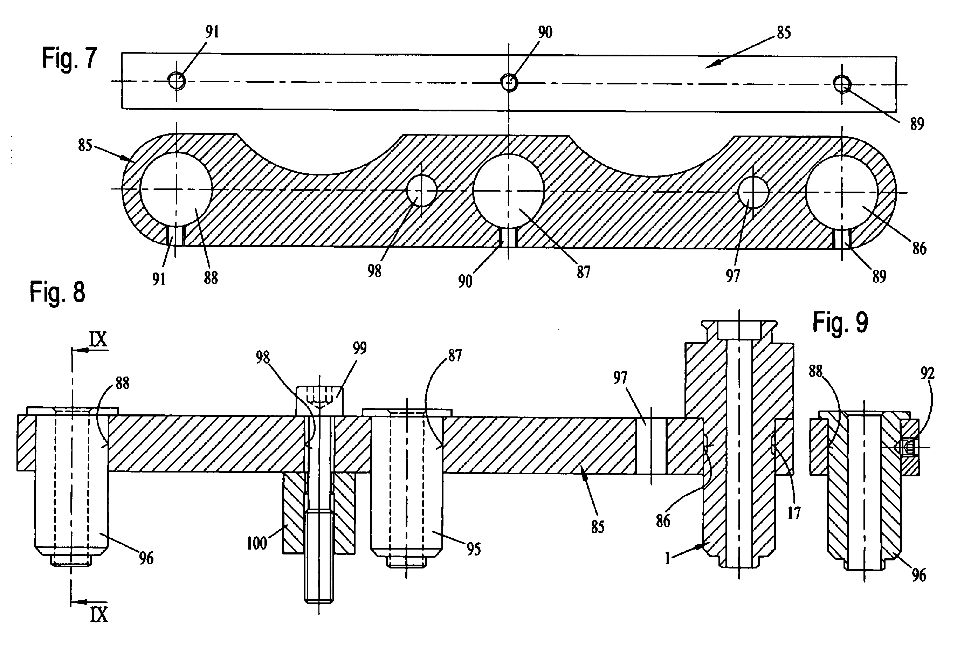

Fig. 7 zeigt beispielhaft einen Montagesteg 85 in Seitenansicht sowie im Horizontalschnitt. Dieser Montagesteg 85 dient zur Festlegung der Bohrbuchse 1 beispielsweise an einem Zylinderkopf. Hierzu bildet dieser Montagesteg 85 insgesamt drei Aufnahmebohrungen 86, 87 und 88, welche zur wahlweisen Aufnahme der Bohrbuchse 1 dienen. Jeder der Aufnahmebohrungen 86 bis 88 ist jeweils ein quer dazu verlaufendes Innengewinde 89, 90 bzw. 91 zugeordnet, in welche eine entsprechende Madenschraube (Fig. 9) 92 einschraubbar ist. Fig. 9 zeigt dabei eine Schnittdarstellung entlang der Schnittlinie IX - IX aus Fig. 8.

Mittels dieser Madenschraube 92 ist die Bohrbuchse 1 in der entsprechenden Aufnahmebohrung 86, 87 oder 88 fixierbar, wobei die Madenschraube 92 beispielsweise in die bereits zu Fig. 1 beschriebene Montagenut 17 der Bohrbuchse 1 eingreift. Die Bohrbuchse 1 ist in der Darstellung der Fig. 8 beispielhaft in die Aufnahmebohrung 86 des Montagesteges 85 eingesetzt.

Zum Ausrichten und Ansetzen des Montagesteges 85 können zur Bohrbuchse 1 zusätzliche Stützhülsen 95 und 96 vorgesehen sein, wie dies beispielhaft den Fig. 8 und 9 entnehmbar ist. Diese Stützhülsen 95 und 96 stützen sich im montierten Zustand am Zylinderkopf vorzugsweise im Bereich von Aufnahmebohrungen von weiteren beispielsweise Glühkerzen ab. Da in die Aufnahmebohrungen 87 und 88 des Montagesteges 85 auch die Bohrbuchse 1 passend einsetzbar ist, können durch Austauschen einer der Stützhülsen 95 oder 96 gegen die Bohrbuchse 1 in einer Aufspannung des Montagestege am Zylinderkopf mehrere Aufnahmebohrungen des Zylinderkopfes nacheinander bearbeitet werden.

Soll nur eine der Aufnahmebohrungen des Zylinderkopfes bearbeitet werden, so können die Stützhülsen 95, 96 auch derart ausgestaltet sein, dass diese im am Zylinderkopf angesetzten Zustand die noch in den Aufnahmebohrungen des Zylinderkopfes sitzenden Glühkerzen aufnehmen (in der Zeichnung nicht explizit dargestellt).

Des Weiteren weist der Montagesteg 85 zwei Durchgangsbohrungen 97 und 98 auf, durch welche eine Befestigungsschraube 99 (Fig. 8) hindurch steckbar ist, wie dies für die Durchgangsbohrung 98 in Fig. 8 dargestellt ist. Mittels dieser Befestigungsschraube 99 kann der Montagesteg 85 an einem Zylinderkopf feststehend montiert werden. Dazu kann, wie dies beispielhaft in Fig. 8 dargestellt ist, eine Distanzhülse 100 vorgesehen sein, so dass in entsprechender Anpassung an die axiale Länge der Stützhülsen 95 und 96 eine Durchbiegung des Montagesteges 85 im montierten Zustand sicher verhindert wird. Bei dem in Fig. 8 dargestellten Ausführungsbeispiel ist die aus Fig. 6 ersichtliche montierte Bohrbuchse 1 mit dem Bearbeitungswerkzeug 50 beispielsweise in die rechte Aufnahmebohrung 86 einsetzbar. Die beiden Stützhülsen 95 und 96 sind hingegen in den beiden Aufnahmebohrungen 87 und 88 angeordnet und mittels entsprechender Madenschrauben gesichert, wie dies in Fig. 9 für die Stützhülse 96 dargestellt ist.

Zusammenfassend ist somit festzustellen, dass mittels der erfindungsgemäßen Vorrichtung bei der Bearbeitung einer Aufnahmebohrung entstehende bzw. anfallende Späne sicher "abgesaugt" werden können und somit nicht in einen Hohlraum, insbesondere nicht in einen Zylinder eines Kraftfahrzeugmotors gelangen können.

## Patentansprüche

1. Vorrichtung (1, 50) zur Nachbearbeitung einer Aufnahmebohrung (80) insbesondere eines Zylinderkopfes (81), welche in einen Hohlraum, insbesondere in den Brennraum eines Zylinders eines Kraftfahrzeugmotors mündet mit einem Bearbeitungswerkzeug (50) und mit einer eine Führungsbohrung (2) aufweisenden Bohrbuchse (1), welche zum Ausrichten eines in der Führungsbohrung (2) axial verstellbar aufgenommenen Werkzeugteils (51) des Bearbeitungswerkzeuges (50) in Form eines Bohrwerkzeuges, einer Reibahle (51), eines Gewindeschneiders oder dgl. konzentrisch an der Aufnahmebohrung (80) ansetzbar und in dieser Position fixierbar ist, wobei das Werkzeugteil (51) im montierten Zustand die Führungsbohrung (2) der Bohrbuchse (1) axial verstellbar und/oder drehbar durchragt,
**dadurch gekennzeichnet,**
**dass** die Bohrbuchse (1) mit einer mit der Aufnahmebohrung (80) in Verbindung stehenden Saugeinrichtung (4) versehen ist, durch welche in der Aufnahmebohrung (80) ein Saugluftstrom (16) bewirkbar ist, mittels welchem bei der Bearbeitung der Aufnahmebohrung (80) entstehende Späne oder dgl. nach außen abführbar sind und,
**dass** das Werkzeugteil (51) an seinem Außenumfang mit wenigsten einer axial geradlinig oder gewendelt verlaufenden Nut (59) versehen ist, welche zusammen mit der Führungsbohrung (2) eine Art Abfuhrkanal zur Späneabfuhr bildet.

2. Vorrichtung nach Anspruch 1, **dadurch gekennzeichnet, dass** die Saugeinrichtung nach dem "Venturiprinzip" arbeitet und in einem Kopfteil (4) der Bohrbuchse (1) angeordnet ist und, dass die Saugwirkung über die Führungsbohrung (2) in die Aufnahmebohrung (80) eingeleitet wird.

3. Vorrichtung nach Anspruch 2, **dadurch gekennzeichnet, dass** das Kopfteil (4) als Saugeinrichtung eine radial abgesetzt ausgebildete Durchgangbohrung (5) aufweist, welche quer zur Führungsbohrung (2) verlaufend im Kopfteil (4) angeordnet ist und welche mit der Führungsbohrung (2) in Wirkverbindung steht und,
dass der Durchgangsbohrung (5) zur Erzeugung der Saugwirkung ein Luftstrom (Pfeil 15) von einer Druckluftquelle zuführbar ist.

4. Vorrichtung nach Anspruch 3, **dadurch gekennzeichnet, dass** die Durchgangsbohrung (5) "eingangsseitig" mit einem Montagegewinde (9) versehen ist, mit welchem ein Anschlussstutzen (20) zur Zuführung der Druckluft (Pfeil 15) dicht koppelbar ist.

5. Vorrichtung nach Anspruch 4, **dadurch gekennzeichnet, dass** sich an das Montagegewinde (9) der Durchgangsbohrung in Strömungsrichtung (Pfeil 15) ein Kanalabschnitt (10) mit kleinem Durchmesser anschließt.

6. Vorrichtung nach Anspruch 5, **dadurch gekennzeichnet, dass** der Kanalabschnitt (10) im Kopfteil (4) tangential an der Führungsbohrung (2) vorbei geführt ist.

7. Vorrichtung nach Anspruch 5 oder 6, **dadurch gekennzeichnet, dass** sich in Strömungsrichtung (Pfeil 15) an den Kanalabschnitt (10) ein radial erweiterter Auslasskanal (11) anschließt, welcher mit dem Führungsbohrung (2) in Verbindung steht.

8. Vorrichtung nach Anspruch 7, **dadurch gekennzeichnet, dass** der Auslasskanal (11) in seinem äußeren Endbereich (Rückseite 12) einen radial erweiterten Kupplungsabschnitt (13) bildet, in welchen ein Auslassrohr (30) im Wesentlichen dicht einsetzbar ist.

9. Vorrichtung nach Anspruch 8, **dadurch gekennzeichnet, dass** das Auslassrohr (30) eine äußere umlaufende Montagenut (32) aufweist, mit welcher ein Auffangbehältnis, insbesondere in Form eines textilen Sackes (45) zur Aufnahme der "abgesaugten" Späne koppelbar ist.

10. Vorrichtung nach einem der Ansprüche 1 bis 9, **dadurch gekennzeichnet, dass** das Bearbeitungswerkzeug (50) zur Aufnahme des eigentlichen Werkzeugteils (51) ein Aufnahmeelement (53) aufweist, welches zur Betätigung mit einem Betätigungselement in Form eines Antriebssechskants (61) und/oder eines Antriebshebels (62) versehen ist.

11. Vorrichtung nach Anspruch 10, **dadurch gekennzeichnet, dass** zwischen dem Bearbeitungswerkzeug (50) und dem Kopfteil (4) der Bohrbuchse (1) ein Dichtelement, insbesondere in Form eines Faltenbalges (68) vorgesehen ist, durch welches die Führungsbohrung (2) nach außen abgedichtet ist.

12. Vorrichtung nach einem der Ansprüche 2 bis 11, **dadurch gekennzeichnet, dass** die Bohrbuchse (1) in ihrem dem Kopfteil (4) axial gegenüberliegenden Endbereich einen axial vorstehenden Kupplungsstutzen (14) aufweist, mit welchem die Bohrbuchse (1) im Wesentlichen dicht an einem Zylinderkopf (81) im Bereich der zu bearbeitenden Aufnahmebohrung (80) ansetzbar ist.

13. Vorrichtung nach einem der Ansprüche 1 bis 12, **dadurch gekennzeichnet, dass** zur ausgerichteten Fixierung der Bohrbuchse (1) am Zylinderkopf (81) ein Montagesteg (85) vorgesehen ist, welcher in einer vorbestimmten Position am Zylinderkopf (81) befestigbar ist und,
dass der Montagesteg (85) mehrere Aufnahmebohrungen (86, 87, 88) aufweist, in welche die Bohrbuchse (1) wahlweise feststehend einsetzbar ist und,
dass die Aufnahmebohrungen (86, 87, 88) im Montagesteg (85) in ihrem Abstand und in ihrer Ausrichtung derart angeordnet sind, dass die in die jeweilige Aufnahmebohrung (86, 87, 88) eingesetzte Bohrbuchse (1) zwangläufig präzise auf die jeweils zu bearbeitende Aufnahmebohrung (80) des Zylinderkopfes (81) ausgerichtet ist.

14. Vorrichtung nach Anspruch 13, **dadurch gekennzeichnet, dass** zur präzisen Positionierung des Montagesteges (85) an einem Zylinderkopf (81) zusätzliche Stützhülsen (95, 96) vorgesehen sind, die in die Aufnahmebohrungen (86, 87, 88) des Montagesteges (85) einsetzbar sind, in welcher die Bohrbuchse (1) nicht eingesetzt ist und,
dass sich die Stützhülsen (95, 96) im montierten Zustand vorzugweise im Umgebungsbereich von nicht zu bearbeitenden Aufnahmenbohrungen des Zylinderkopfes (81) abstützen.

15. Vorrichtung nach Anspruch 13 oder 14, **dadurch gekennzeichnet, dass** zur feststehenden Fixierung des Montagesteges (85) am Zylinderkopf (81) eine den Montagesteg (85) durchragende Befestigungsschraube (99) vorgesehen ist und,
dass zwischen dem Montagesteg und dem Zylinderkopf (81) im Bereich der Befestigungsschraube (99) eine Distanzhülse (100) vorgesehen ist.

## Claims

1. Apparatus (1, 50) for reworking a receiving bore (80), in particular of a cylinder head (81), which receiving bore (80) opens into a cavity, in particular into the combustion chamber of a cylinder of a motor vehicle engine, by way of a machining tool (50) and by way of a boring bush (1) having a guide bore (2) which can be attached concentrically on the receiving bore (80) and can be fixed in this position in order to orient a tool part (51) of the machining tool (50) in the form of a boring tool, a reamer (51), a thread cutter or the like, which tool part (51) is received axially adjustably in the guide bore (2), the tool part (51) penetrating the guide bore (2) of the boring bush (1) in the mounted state in an axially adjustable and/or rotatable manner, **characterized in that** the boring bush (1) is provided with a suction device (4) which is connected to the receiving bore (80) and by way of which a suction air flow (16) can be brought about in the receiving bore (80), by means of which suction air flow (16) chips or the like which are produced during the machining of the receiving bore (80) can be discharged to the outside, and **in that** the tool part (51) is provided on its outer circumference with at least one groove (59) which runs in an axially rectilinear or helical manner and, together with the guide bore (2), forms a type of discharge channel for chip discharge.

2. Apparatus according to Claim 1, **characterized in that** the suction device operates according to the "Venturi principle" and is arranged in a head part (4) of the boring bush (1), and **in that** the suction action is introduced via the guide bore (2) into the receiving bore (80).

3. Apparatus according to Claim 2, **characterized in that** the head part (4) has, as suction device, a through bore (5) which is configured so as to be set off radially, is arranged in the head part (4) so as to run transversely with respect to the guide bore (2), and is operatively connected to the guide bore (2), and **in that** an air flow (arrow 15) can be fed by a compressed air source to the through bore (5) in order to generate the suction action.

4. Apparatus according to Claim 3, **characterized in that** the through bore (5) is provided "on the inlet side" with a mounting thread (9), to which a connector stub (20) for feeding in the compressed air (arrow 15) can be coupled tightly.

5. Apparatus according to Claim 4, **characterized in that** a channel section (10) with a small diameter adjoins the mounting thread (9) of the through bore in the flow direction (arrow 15).

6. Apparatus according to Claim 5, **characterized in that** the channel section (10) is routed tangentially past the guide bore (2) in the head part (4).

7. Apparatus according to Claim 5 or 6, **characterized in that** a radially widened outlet channel (11) which is connected to the guide bore (2) adjoins the channel section (10) in the flow direction (arrow 15).

8. Apparatus according to Claim 7, **characterized in that**, in its outer end region (rear side 12), the outlet channel (11) forms a radially widened coupling section (13), into which an outlet pipe (30) can be inserted substantially tightly.

9. Apparatus according to Claim 8, **characterized in that** the outlet pipe (30) has an outer circumferential mounting groove (32), to which a collecting vessel, in particular in the form of a textile sack (45) for receiving the "extracted" chips, can be coupled.

10. Apparatus according to one of Claims 1 to 9, **characterized in that**, for receiving the actual tool part (51), the machining tool (50) has a receiving element (53) which is provided for actuation purposes with an actuating element in the form of a drive hexagon socket (61) and/or a drive lever (62).

11. Apparatus according to Claim 10, **characterized in that** a sealing element, in particular in the form of a boot, is provided between the machining tool (50) and the head part (4) of the boring bush (1), by way of which sealing element the guide bore (2) is sealed to the outside.

12. Apparatus according to one of Claims 2 to 11, **characterized in that** the boring bush (1) has an axially projecting coupling stub (14) in its end region which lies axially opposite the head part (4), by way of which the boring bush (1) can be attached substantially tightly on a cylinder head (81) in the region of the receiving bore (80) to be machined.

13. Apparatus according to one of Claims 1 to 12, **characterized in that**, for fixing the boring bush (1) on the cylinder head (81) in an oriented manner, a mounting web (85) is provided which can be fastened to the cylinder head (81) in a predefined position, and **in that** the mounting web (85) has a plurality of receiving bores (86, 87, 88), into which the boring bush (1) can optionally be inserted in a fixed manner, and **in that** the receiving bores (86, 87, 88) are arranged in the mounting web (85) in terms of their spacing and their orientation in such a way that the boring bush (1) which is inserted into the respective receiving bore (86, 87, 88) is necessarily oriented precisely onto that receiving bore (80) of the cylinder head (81) which is to be machined in each case.

14. Apparatus according to Claim 13, **characterized in that**, for precise positioning of the mounting web (85) on a cylinder head (81), additional supporting sleeves (95, 96) are provided which can be inserted into those receiving bores (86, 87, 88) of the mounting web (85), in which the boring bush (1) is not inserted, and **in that**, in the mounted state, the supporting sleeves (95, 96) are preferably supported in the surrounding region of receiving bores of the cylinder head (81) which are not to be machined.

15. Apparatus according to Claim 13 or 14, **characterized in that**, for stationary fixing of the mounting web (85) on the cylinder head (81), a fastening screw (99) which penetrates the mounting web (85) is provided, and **in that** a spacer sleeve (100) is provided between the mounting web and the cylinder head (81) in the region of the fastening screw (99).

## Revendications

1. Dispositif (1, 50) de post-usinage d'un alésage de réception (80), en particulier une culasse (81), qui débouche dans une cavité, en particulier dans la chambre de combustion d'un cylindre d'un moteur de véhicule automobile, comprenant un outil d'usinage (50) et un canon de perçage (1) présentant un alésage de guidage (2), lequel canon de perçage, pour l'alignement d'une partie d'outil (51) de l'outil d'usinage (50), reçue de manière déplaçable axialement dans l'alésage de guidage (2), peut être appliqué sous la forme d'un outil de perçage, d'un alésoir (51), d'un taraud ou similaire, concentriquement contre l'alésage de réception (80) et peut être fixé dans cette position, la partie d'outil (51), dans l'état monté, traversant l'alésage de guidage (2) du canon de perçage (1) de manière déplaçable axialement et/ou de manière rotative,
**caractérisé en ce que**
le canon de perçage (1) est pourvu d'un dispositif d'aspiration (4) en liaison avec l'alésage de réception (80), avec lequel un flux d'air d'aspiration (16) peut être produit dans l'alésage de réception (80), au moyen duquel les copeaux ou similaires produits lors de l'usinage de l'alésage de réception (80) peuvent être évacués vers l'extérieur et
**en ce que** la partie d'outil (51) est pourvue, au niveau de sa périphérie extérieure, d'au moins une rainure (59) s'étendant en ligne droite axialement ou en hélice, qui forme conjointement avec l'alésage de guidage (2) une espèce de canal d'évacuation pour l'évacuation des copeaux.

2. Dispositif selon la revendication 1, **caractérisé en ce que** le dispositif d'aspiration fonctionne selon le principe "venturi" et est disposé dans une partie de tête (4) du canon de perçage (1), et **en ce que** l'effet d'aspiration est introduit par le biais de l'alésage de guidage (2) dans l'alésage de réception (80).

3. Dispositif selon la revendication 2, **caractérisé en ce que** la partie de tête (4) présente en tant que dispositif d'aspiration un alésage traversant (5) réalisé avec un décalage radial, qui est disposé dans la partie de tête (4) de manière à s'étendre transversalement à l'alésage de guidage (2) et qui est en liaison fonctionnelle avec l'alésage de guidage (2) et
**en ce qu'**un flux d'air (flèche 15) peut être acheminé depuis une source d'air comprimé à l'alésage traversant (5) pour générer l'effet d'aspiration.

4. Dispositif selon la revendication 3, **caractérisé en ce que** l'alésage traversant (5) est pourvu "du côté de l'entrée" d'un filetage de montage (9) avec lequel un raccord (20) peut être accouplé de manière hermétique pour l'alimentation en air comprimé (flèche 15).

5. Dispositif selon la revendication 4, **caractérisé en ce qu'**une portion de canal (10) de petit diamètre se raccorde au filetage de montage (9) de l'alésage traversant dans la direction de l'écoulement (flèche 15).

6. Dispositif selon la revendication 5, **caractérisé en ce que** la portion de canal (10) est guidée dans la partie de tête (4) tangentiellement devant l'alésage de guidage (2).

7. Dispositif selon la revendication 5 ou 6, **caractérisé en ce qu'**un canal de sortie (11) élargi radialement se raccorde dans la direction d'écoulement (flèche 15) à la portion de canal (10), lequel canal de sortie est en liaison avec l'alésage de guidage (2).

8. Dispositif selon la revendication 7, **caractérisé en ce que** le canal de sortie (11) forme dans sa région d'extrémité extérieure (côté arrière 12) une portion d'accouplement élargie radialement (13), dans laquelle un tube de sortie (30) peut être inséré de manière essentiellement hermétique.

9. Dispositif selon la revendication 8, **caractérisé en ce que** le tube de sortie (30) présente une rainure de montage (32) périphérique extérieure, à laquelle un récipient de collecte, en particulier sous forme d'un sac textile (45), peut être accouplé pour recevoir les copeaux "aspirés".

10. Dispositif selon l'une quelconque des revendications 1 à 9, **caractérisé en ce que** l'outil d'usinage (50) présente, pour recevoir la partie d'outil proprement dite (51), un élément de réception (53) qui, en vue de l'actionnement, est pourvu d'un élément d'actionnement sous la forme d'une tige d'entraînement à six pans creux (61) et/ou d'un levier d'entraînement (62).

11. Dispositif selon la revendication 10, **caractérisé en ce qu'**entre l'outil d'usinage (50) et la partie de tête (4) du canon de perçage (1) est prévu un élément d'étanchéité, en particulier sous la forme d'un soufflet (68), par le biais duquel l'alésage de guidage (2) est étanchéifié vis-à-vis de l'extérieur.

12. Dispositif selon l'une quelconque des revendications 2 à 11, **caractérisé en ce que** le canon de perçage (1), dans sa région d'extrémité axialement opposée à la partie de tête (4), présente un raccord saillant axialement (14), avec lequel le canon de perçage (1) peut être appliqué de manière essentiellement hermétique contre une culasse (81) dans la région de l'alésage de réception (80) à usiner.

13. Dispositif selon l'une quelconque des revendications 1 à 12, **caractérisé en ce que** pour la fixation alignée du canon de perçage (1) sur la culasse (81), il est prévu une nervure de montage (85) qui peut être fixée sur la culasse (81) dans une position prédéterminée, et
**en ce que** la nervure de montage (85) présente plusieurs alésages de réception (86, 87, 88) dans lesquels le canon de perçage (1) peut être inséré fixement au choix, et
**en ce que** les alésages de réception (86, 87, 88) dans la nervure de montage (85) sont disposés, en termes de leur espacement et de leur orientation, de telle sorte que le canon de perçage (1) inséré dans l'alésage de réception respectif (86, 87, 88) soit orienté forcément précisément sur l'alésage de réception à usiner respectif (80) de la culasse (81).

14. Dispositif selon la revendication 13, **caractérisé en ce que** pour le positionnement précis de la nervure de montage (85) sur une culasse (81), des douilles de support supplémentaires (95, 96) sont prévues, lesquelles peuvent être insérées dans les alésages de réception (86, 87, 88) de la nervure de montage (85) dans lesquels le canon de perçage (1) n'est pas inséré, et
**en ce que** les douilles de support (95, 96) s'appuient dans l'état monté de préférence dans la région périphérique d'alésages de réception de la culasse (81) ne devant pas être usinés.

15. Dispositif selon la revendication 13 ou 14, **caractérisé en ce que** pour la fixation immobilisée de la nervure de montage (85) sur la culasse (81), il est prévu une vis de fixation (99) traversant la nervure de montage (85), et
**en ce qu'**entre la nervure de montage et la culasse (81) dans la région de la vis de fixation (99) est prévue une douille d'espacement (100).
